# FASCICULE DE BREVET EUROPEEN

(11) **EP 1 526 733 B1**
(45) Date de publication et mention de la délivrance du brevet: **17.11.2010**
(21) Numéro de dépôt: 04292502.4
(22) Date de dépôt: 21.10.2004
(51) Int. Cl.: H04N 7/18

(54) **Procédé de commande automatique de la direction de l'axe optique et du champ angulaire d'une caméra électronique, notamment pour vidéosurveillance par poursuite automatique**
Automatisches Verfahren zur Kontrolle der optischen Achsenausrichtung und des Blickfeldwinkels einer der elektronischen Kamera, insbesondere für die Videoüberwachung mit automatischer Zielverfolgung
Automatic method for controlling the direction of the optical axis and the angle of the field of view of an electronic camera, especially for video surveilance using automatic tracking

(30) Priorité: 21.10.2003 FR 0312298
(43) Date de publication de la demande: 27.04.2005
(73) Titulaire: Egregore II, 91070 Bondoufle (FR); Ankri, Rénald, 91350 Grigny (FR); Giraud, Philippe, 91590 La Ferte-Alais (FR)
(72) Inventeur: Ankri, Rénald, 91350 Gringy (FR)
(74) Mandataire: Schmit, Christian Norbert Marie

(56) Documents cités:
- EP-A- 0 729 036
- EP-A- 0 966 155
- EP-A- 1 107 584
- US-A1- 2001 028 395
- US-A1- 2002 054 212
- US-A1- 2003 093 430
- PATENT ABSTRACTS OF JAPAN vol. 1997, no. 12, 25 décembre 1997 (1997-12-25) & JP 09 214946 A (FUJITSU GENERAL LTD), 15 août 1997 (1997-08-15)

## Description

La présente invention concerne de façon générale les techniques de vidéosurveillance, et plus précisément, elle concerne la commande automatique de la direction de l'axe optique et du champ angulaire d'une caméra électronique orientable à champ angulaire variable, donnant une image qui peut être affichée sur un écran.

Le document US 2001/028395 concerne un système de vidéoconférence dans lequel l'opérateur dirige une caméra vers la personne qui parle, et règle le champ angulaire. Le réglage de la direction de l'axe optique et le réglage du champ angulaire de la caméra sont toujours effectués dans deux opérations successives.

Le document EP-1 107 584 concerne un dispositif qui suit des déplacements définis à partir de positions et réglages déterminés au préalable, sans relation générale entre la direction et le champ angulaire.

Dans le domaine technique de la vidéosurveillance, on connaît déjà des installations possédant des caméras fixes, détectant un mouvement à l'aide d'un capteur exécutant une analyse d'image. Cette détection de mouvement est par exemple destinée à déclencher un enregistrement de l'image affichée.

On connaît aussi des installations qui comprennent des caméras électroniques orientables, en général suivant deux axes perpendiculaires l'un à l'autre, sous la commande d'une manette de jeux (joystick). Une personne chargée d'une surveillance, disposant d'une ou plusieurs manettes et d'un ou plusieurs écrans affichant chacun une ou plusieurs images, peut commander la direction et le champ angulaire de chaque caméra. Plus précisément, à l'aide d'une manette déplacée dans les directions droite-gauche et avant-arrière, cette personne modifie la direction de l'axe optique de la caméra. En enfonçant plus ou moins le bouton de la manette, elle modifie le champ angulaire de la caméra, par réglage du zoom de celle-ci.

En outre, on connaît des caméras commandées par un joystick dans lesquelles la commande du déplacement de l'axe optique est effectuée suivant une relation telle que la vitesse de déplacement de l'axe optique est plus petite lorsque le champ angulaire est petit, comme décrit dans le document EP-0966155.

Ces installations présentent des avantages importants, mais elles ont l'inconvénient de soumettre le personnel à un stress important.

Plus précisément, l'utilisateur d'une manette de jeux est obligé de remplir simultanément la fonction d'un opérateur très expérimenté pour la manoeuvre de la manette (direction et grandissement), et la fonction d'un observateur de l'image à cadrage variable affichée l'écran unique associé. Si la manoeuvre de la manette est excessivement rapide, l'utilisateur peut perdre la sensation de continuité du déplacement de l'image, et il ne sait plus quelle partie des locaux surveillés il voit sur l'écran. Il doit commander la manette de manière progressive adaptée à l'image particulière affichée. Comme sa fonction d'opérateur est asservie sur sa fonction d'observateur, il ne lui est pas possible d'observer simultanément des images sur d'autres écrans. Cette ignorance de ces autres images, et donc des autres événements, et cet asservissement le soumettent à une situation de stress.

Un autre inconvénient est que l'utilisateur ne peut commander qu'une seule manette de jeux à la fois, et ne peut donc surveiller qu'un seul emplacement à la fois (une seule image) lorsqu'il déplace la manette de jeux.

L'invention a pour objet de remédier aux inconvénients de ces installations connues à manette de jeux qui nécessitent une grande expertise de ses utilisateurs.

L'expérience montre que, quand une personne regarde un paysage à travers des jumelles très grossissantes, si elle effectue un déplacement rapide, elle n'est plus capable de reconnaître l'emplacement vers lequel sont dirigées ses jumelles. Pour que la personne se rende compte de l'emplacement qu'elle voit, il faut qu'elle déplace ses jumelles à une vitesse suffisamment réduite pour que son cerveau puisse apprécier la continuité des images observées successivement pendant le déplacement. Plus les jumelles ont un grandissement élevé, plus leur champ est petit et plus la vitesse de déplacement doit être réduite.

L'invention applique ce phénomène l'automatisation de la commande d'installations de surveillance.

Plus précisément, l'invention concerne la commande automatique, sans manette, de la direction de l'axe optique et du champ angulaire d'une caméra électronique. Ainsi, après détection d'un mouvement, le procédé de l'invention permet d'une part un cadrage progressif et d'autre part, un grandissement convenable de l'image tels qu'une sensation de continuité est automatiquement obtenue par l'observateur, grâce à l'utilisation d'une vitesse de déplacement qui est liée au champ angulaire de la caméra. Plus le champ angulaire est petit, c'est-à-dire plus la région vue sur l'image de la caméra est petite, et plus la vitesse de déplacement de l'axe optique de la caméra est petite.

Plus précisément, l'invention concerne un procédé de commande automatique de la direction de l'axe optique et du champ angulaire d'une caméra électronique orientable à champ angulaire variable donnant une image qui peut être affichée sur un écran, du type qui comprend la détermination d'une direction cible, la commande de la direction de l'axe optique de la caméra afin qu'il se rapproche de la direction cible, et le réglage du champ angulaire de la caméra ; selon l'invention, la commande de la direction de l'axe optique vers la direction cible et le réglage du champ angulaire de la caméra sont exécutés suivant une relation telle que la vitesse de variation de la commande de direction est plus petite lorsque le champ angulaire est petit, et le procédé de commande commence à être exécuté lorsqu'un événement s'est produit dans le champ angulaire de la caméra.

De préférence, la relation entre la vitesse de variation de la commande de direction et le champ angulaire est déterminée par sélection par l'utilisateur. Par exemple, la relation est déterminée par sélection d'une vitesse maximale pour au moins un champ angulaire déterminé. Dans une variante, la relation dépend d'un paramètre supplémentaire global ou étendu de l'image, tel que sa luminosité.

Dans un mode d'exécution, le réglage du champ angulaire de la caméra est réalisé par variation de la distance focale d'un objectif de la caméra.

Dans un autre mode d'exécution, le réglage du champ angulaire est effectué par traitement numérique du signal de la caméra.

Dans un exemple d'exécution, la caméra possède un zoom à commande automatique, et l'événement déclenchant le procédé de commande est le fonctionnement du zoom à commande automatique. Dans un autre exemple, l'événement déclenchant le procédé de commande est la variation du signal de luminance ou de chrominance au moins de la caméra électronique.

Dans un autre mode d'exécution, le procédé de commande commence à être exécuté lorsqu'une nouvelle direction cible est déterminée.

Dans un mode d'exécution, la détermination de la direction cible est effectuée par indication d'un emplacement sur l'écran. Ainsi, l'indication d'un emplacement sur l'écran peut être réalisée par pointage, par exemple avec une souris ou sur un écran tactile.

Dans un autre mode d'exécution, la détermination de la direction cible est effectuée par indication de coordonnées d'un emplacement sur l'écran.

Dans un autre mode d'exécution, la détermination de la direction cible est effectuée par analyse de l'image de la caméra en référence à la variation d'une composante de luminance ou de chrominance au moins d'une partie au moins de l'image de la caméra. De préférence, l'analyse comprend la détermination de la plus grande variation parmi les variations déterminées dans au moins quatre régions disposées autour du centre de l'image, et l'orientation de la direction cible vers une région de plus grande variation. Par exemple, la détermination de la plus grande variation peut être effectuée par détermination de la variation en plusieurs points alignés sur une grille.

Dans ce mode d'exécution, il est avantageux que la caméra donne une image en couleurs, et que l'analyse soit effectuée sur un seul canal de couleur du signal de la caméra. Par exemple, l'analyse est effectuée sur le canal de couleur verte.

Dans un mode d'exécution très avantageux, le procédé est au moins partiellement exécuté par un module logiciel ayant une fonction "multi-protocole".

Dans les divers modes d'exécution, il est avantageux que la caméra soit orientable par rotation autour de deux axes perpendiculaires.

D'autres caractéristiques et avantages de l'invention seront mieux compris à la lecture de la description qui va suivre d'exemples d'exécution, faite en référence aux dessins annexés sur lesquels :
la figure 1 représente une image ayant une grille de points d'échantillonnage, utilisée dans un exemple de mise en oeuvre de l'invention ;
la figure 2 représente un exemple de division d'une image pour la détermination de la direction cible d'une caméra électronique ; et
la figure 3 représente un exemple de courbe représentant la variation de la vitesse de déplacement en fonction de la distance focale de l'objectif de la caméra.

L'invention concerne le domaine de la vidéosurveillance par utilisation d'un procédé de commande automatique destiné à permettre l'observation et/ou l'enregistrement d'images représentant tous les mouvements dans une région étendue surveillée. Elle permet ainsi une poursuite automatique de tous les mouvements dans cette zone.

Plus précisément, le but de la vidéosurveillance comprend d'abord la détection de la présence d'un sujet mobile dans une zone surveillée, puis la poursuite automatique du sujet dans cette zone, avec observation et/ou enregistrement. Pour que cette observation et/ou cet enregistrement soient optimaux, il est primordial que le cadrage et le grandissement soient optimisés.

L'invention concerne un procédé de commande automatique, notamment de poursuite, gui assure à la fois un tel cadrage optimisé et l'obtention d'un grandissement optimisé.

Dans un mode d'exécution, la surveillance commence par la détection d'un mouvement, dans la zone surveillée, c'est-à-dire dans l'image de la caméra.

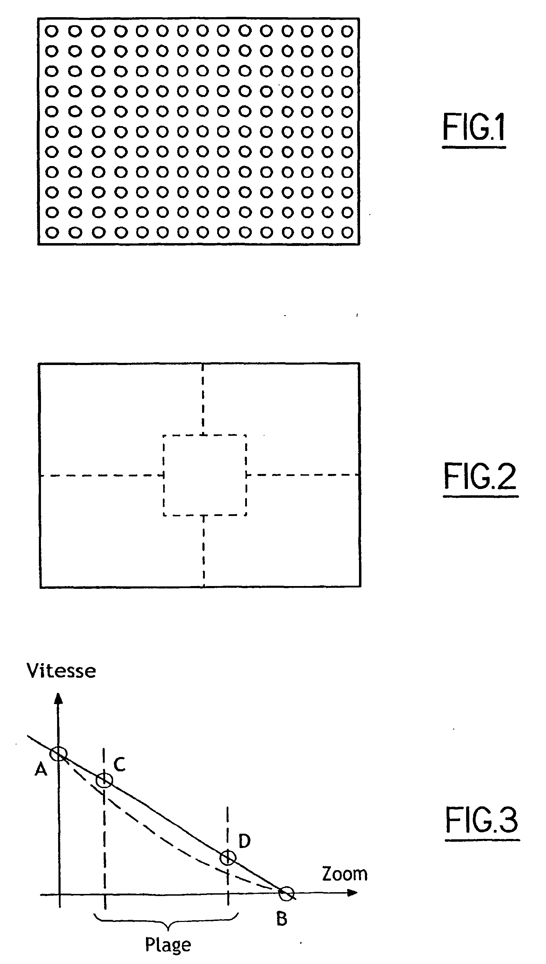

Les figures 1 et 2 illustrent un exemple de détermination d'un mouvement. La figure 1 représente une grille d'échantillonnage ; en chaque point, un paramètre tiré d'un signal de luminance et/ou de chrominance de la caméra est par exemple moyenné à chacun des points d'échantillonnage indiqués sur la figure 1. Dans un cas particulier, explicité dans la suite, on utilise par exemple les huit bits de poids inférieur du signal numérique de la caméra.

Le mouvement peut être détecté par traitement des échantillons des points de la grille contenus dans chacune des régions placées aux quatre coins du cadre d'image indiqué sur la figure 2. Dans chaque région, une pondération peut être introduite sur la valeur de chaque point. Dans cet exemple, une partie centrale ou "zone morte" n'est pas prise en compte et permet de limiter les déplacements non significatifs des caméras.

Cette simple disposition dans quatre régions permet de déterminer quelle est celle de ces quatre zones dans laquelle la variation du signal traité est la plus grande. Cette détermination est utilisée pour commander un déplacement de l'axe optique de la caméra vers la région indiquant le plus grand déplacement.

Cette opération de déplacement peut être exécutée jusqu'à ce que, compte tenu d'une valeur de seuil, il existe un équilibre entre les quatre régions.

On conçoit qu'un tel traitement numérique des signaux de la caméra puisse nécessiter une puissance de calcul relativement élevée. Sur la figure 1, on n'a représenté qu'un nombre réduit de points d'échantillonnage, le nombre utilisé en réalité pouvant être beaucoup plus élevé. Pour que ce calcul puisse être plus rapide, on n'utilise de préférence qu'un seul canal de couleur du signal de la caméra. On sait que, même si la caméra est en noir et blanc, elle comporte en réalité trois canaux. Lorsqu'elle donne une image en couleurs, les canaux correspondent aux couleurs bleue, rouge et verte.

Dans le cas particulier du signal vidéo le plus courant, le signal comporte vingt-quatre bits, les bits d'ordre supérieur étant réservés au bleu, les huit bits intermédiaires au rouge et les huit bits inférieurs au vert. Si le canal traité est le canal bleu ou rouge, un décalage du signal vidéo est nécessaire pour la sélection des bits convenables. Si le canal traité est le canal vert, aucun décalage n'est nécessaire, et il suffit de conserver les huit bits d'ordre inférieur. On conçoit que le traitement numérique peut ainsi être accéléré, c'est-à-dire que la puissance de calcul nécessaire peut être réduite.

Dans l'exemple qu'on vient de décrire, la caméra est disposée dans un "dôme" de type bien connu dans la technique, dans lequel la caméra peut être orientée suivant deux axes perpendiculaires, en général un axe horizontal et un axe vertical. La caméra comporte fréquemment une optique à focale variable de façon continue, appelée zoom, munis d'une commande automatique de focalisation.

On a décrit un exemple dans lequel la première opération dans la mise en oeuvre du procédé, c'est-à-dire la détermination de la direction cible, est exécutée en fonction de la détection d'un mouvement, c'est-à-dire un cas dans lequel la détermination de la direction cible est effectuée progressivement par détermination de la zone de plus grande variation dans l'image de la caméra.

Cependant, cette détermination de la direction cible peut être réalisée de manière différente. Par exemple, dans un cas simple, il est possible d'indiquer un emplacement sur l'écran. Cet emplacement peut être désigné par un organe de pointage, par exemple une souris, ou par un contact avec un écran tactile qui affiche l'image de la caméra. Il est aussi possible de déterminer la direction cible par indication de coordonnées d'un emplacement de l'écran, par tout moyen, même par saisie avec un clavier.

Bien que ces modes d'exécution puissent présenter un intérêt certain dans diverses applications de surveillance, séparément ou en complément, le premier mode d'exécution décrit est plus intéressant parce qu'il est automatique : la détermination de la direction cible s'effectue par analyse de l'image de la caméra, par détermination des variations d'une composante de luminance ou de chrominance.

On considère maintenant les avantages donnés par cet automatisme intégral.

Selon la technique antérieure, la commande de la direction et du champ angulaire d'une caméra, dès la détection d'un mouvement, avec éventuellement enregistrement automatique, n'a pas pu être réalisée automatiquement : elle a donc été exécutée à l'aide de manettes de jeux, dans les systèmes les plus élaborés. Comme indiqué, cette commande d'une manette de jeux par l'utilisateur oblige celui-ci à remplir simultanément les tâches d'un opérateur très expérimenté pour la manoeuvre de la manette, et d'un observateur de l'image variable affichée sur l'écran unique associé : sa fonction d'opérateur est asservie à sa fonction d'observateur, et il ne lui est pas possible d'observer indépendamment d'autres images.

Selon l'invention, l'automatisme est intégral, puisqu'aucune fonction d'opérateur n'est nécessaire: le surveillant peut se consacrer à sa seule tâche d'observation qui peut alors porter sur plusieurs écrans, sans se trouver en situation de stress.

L'invention présente donc les avantages importants de réduire le stress des surveillants d'un système de vidéosurveillance et d'augmenter leurs possibilités de surveillance.

Il est donc possible soit d'effectuer une surveillance plus importante avec un même nombre de personnes, soit de réduire le personnel de surveillance.

On a indiqué dans l'exemple précédent que le déclenchement du procédé de commande automatique était effectué par analyse permanente de l'image et détermination d'un déséquilibre entre les différentes régions de l'image. Cependant, le procédé de commande peut être déclenché par un autre événement.

De préférence, cet événement se produit dans le champ angulaire de la caméra. Il existe à cet effet de très nombreux procédés connus d'analyse d'image permettant de déterminer un événement. L'événement n'est pas toujours la détermination d'un mouvement dans une partie décentrée de l'écran, car il peut être simplement le changement d'un paramètre global de l'image, par exemple de sa luminosité.

Le déclenchement de la commande peut aussi être le résultat d'un événement qui n'est pas lié au contenu de l'image, mais à sa forme. Ainsi, les dômes de surveillance comportent le plus souvent un zoom à commande automatique de focalisation. L'événement qui déclenche le procédé de commande peut être le fonctionnement de ce zoom, c'est-à-dire un changement de son réglage.

Il faut aussi noter que, dans le cas de l'utilisation d'un tel zoom à commande automatique de focalisation, il existe, après chaque changement automatique, une courte période dans laquelle l'image obtenue est perturbée. Il est donc avantageux de ne pas utiliser les images obtenues pendant cette courte période, par exemple de 300 ms après chaque réglage de focalisation du zoom à commande automatique.

Une caractéristique essentielle de l'invention est la relation entre la vitesse de déplacement de l'axe optique de la caméra et la dimension du champ angulaire. Tous les individus ne sont pas sensibles de la même manière à la vitesse de variation de la direction de l'axe optique lorsque le champ angulaire varie. Il est donc souhaitable que la relation puisse être adaptée à l'utilisateur particulier, de préférence par l'utilisateur lui-même.

La figure 3 illustre une possibilité d'une telle adaptation de la relation entre la vitesse de variation de la direction de l'axe optique et le champ angulaire. La figure 3 est un graphique vitesse-distance focale du zoom. I1 indique par la droite en trait plein un exemple de relation entre la vitesse de déplacement de l'axe optique et le réglage du zoom, c'est-à-dire la distance focale de celui-ci. La plage indiquée représente les limites de variation de la distance focale.

Pour définir cette relation linéaire, l'utilisateur peut par exemple déterminer les deux points A et B, ou les deux point C et D, le système déterminant alors la droite qui les relie.

Cependant, il est aussi possible de déterminer une variation plus adaptée, correspondant à une variation de préférence monotone entre la vitesse et la distance focale, par exemple comme indiqué par la courbe en trait interrompu entre les points A et B.

On conçoit qu'il existe de nombreuses autres relations qui peuvent être déterminées de façon plus ou moins élaborées par l'utilisateur, soit par calcul d'une variation à partir de points définis, soit par sélection dans une table de consultation.

Dans une variante, la relation dépend d'un paramètre supplémentaire global ou étendu de l'image, par exemple de sa luminosité, afin qu'elle soit bien adaptée aux réactions physiologiques de l'oeil et du système de vision.

Dans un mode d'exécution avantageux, le procédé de l'invention est partiellement exécuté par un module logiciel programmable et adaptable à de nombreux protocoles des gestion de dômes de surveillance de différents fournisseurs. Ainsi, un même module convient à de nombreux dômes différents dont seuls les fonctions de base de commande d'orientation et de réglage de champ peuvent être utilisées. La transmission des données échangées avec un dôme s'effectue avantageusement par télémétrie, par exemple par un bus RS485. L'information nécessaire peut être transmise au dôme par une communication simplex (à deux fils). Grâce à ce module logiciel, le temps qui s'écoule entre l'analyse d'image et l'action du dôme est extrêmement court. Cette fonction "multi-protocole" du module logiciel est extrêmement utile, car elle permet une évolution simple et progressive de l'installation utilisée, par exemple lors de l'échange ou du remplacement d'un ou plusieurs dômes de même type ou de types différents, et lors de l'augmentation ou de la réduction d'étendue de la zone surveillée.

L'homme du métier, ayant lu le présent mémoire, peut facilement mettre en oeuvre l'invention dans des installations existantes comprenant des caméras de vidéosurveillance, des ordinateurs et divers dispositifs d'alarme, d'enregistrement, etc., par utilisation des techniques connues de traitement d'images.

Bien entendu, diverses modifications peuvent être apportées par l'homme de l'art aux procédés qui viennent d'être décrits uniquement à titre d'exemple non limitatif sans sortir du cadre de l'invention.

## Revendications

1. Procédé de commande automatique de la direction de l'axe optique et du champ angulaire d'une caméra électronique orientable à champ angulaire variable donnant une image qui peut être affichée sur un écran, du type qui comprend:
le commencement de l'exécution du procédé de commande,
la détermination d'une direction cible,
la commande de la direction de l'axe optique de la caméra afin qu'il se rapproche de la direction cible, et
le réglage du champ angulaire de la caméra,
la commande de la direction de l'axe optique vers la direction cible est effectuée suivant une relation (A, B, C, D) telle que la vitesse de variation de la commande de direction est plus petite lorsque le champ angulaire est petit,
**caractérisé en ce que**
le commencement de l'exécution du procédé de commande est effectué automatiquement lorsqu'un événement s'est produit dans le champ angulaire de la caméra,
la commande automatique de la direction de l'axe optique vers la direction cible et le réglage du champ angulaire de la caméra sont exécutés suivant une relation (A, B, C, D) telle que la vitesse de variation de la commande de direction est plus petite lorsque le champ angulaire est petit, cette relation étant adaptable à l'utilisateur de sorte que l'on obtient d'une part un cadrage progressif et d'autre part un grandissement de l'image tels
qu'une sensation de continuité est automatiquement obtenue par l'observateur.

2. Procédé selon la revendication 1, **caractérisé en ce que** une grille d'échantillonnage de la caméra étant utilisée, une partie centrale de cette grille n'est pas prise en compte et permet de limiter les déplacements non significatifs de la caméra.

3. Procédé de commande automatique selon la revendication 1 ou 2, **caractérisé en ce que** la relation (A, B, C, D) est déterminée par sélection par l'utilisateur.

4. Procédé de commande automatique selon l'une des revendications 1 à 3, **caractérisé en ce que** le réglage du champ angulaire de la caméra est réalisé par variation de la distance focale d'un objectif de la caméra.

5. Procédé de commande automatique selon l'une quelconque des revendications précédentes, **caractérisé en ce que** le procédé est au moins partiellement exécuté par un module logiciel ayant une fonction "multi-protocole".

6. Procédé de commande automatique selon l'une quelconque des revendications précédentes, **caractérisé en ce que** l'événement déclenchant la commande est la variation d'un signal au moins choisi parmi les signaux de luminance et les signaux de chrominance de la caméra électronique.

7. Procédé de commande automatique selon l'une quelconque des revendications précédentes, **caractérisé en ce que** la détermination de la direction cible est effectuée par analyse de l'image de la caméra en référence à la variation d'une composante de luminance ou de chrominance au moins d'une partie au moins de l'image de la caméra.

8. Procédé de commande automatique selon la revendication 7, **caractérisé en ce que** l'analyse comprend la détermination de la plus grande variation parmi les variations déterminées dans au moins quatre régions disposées autour du centre de l'image, et l'orientation de la direction cible vers une région de plus grande variation.

9. Procédé de commande automatique selon la revendication 8, **caractérisé en ce que** la détermination de la plus grande variation est effectuée par détermination de la variation en plusieurs points alignés sur une grille.

10. Procédé de commande automatique selon l'une quelconque des revendications 7 à 9, **caractérisé en ce que** la caméra donne une image en couleurs, et l'analyse est effectuée sur un seul canal de couleur du signal de la caméra.

11. Procédé de commande automatique selon la revendication 10, **caractérisé en ce que** l'analyse est effectuée sur le canal de couleur verte.

## Claims

1. Process for automatically controlling the direction of the optical axis and the angular field of an orientable electronic camera having a variable angular field which produces an image that can be displayed on a screen, of the type comprising:
the start of the execution of the control process,
the determination of a target direction,
the control of the direction of the optical axis of the camera so that it is close to the target direction, and
the adjustment of the angular field of the camera,
the control of the direction of the optical axis towards the target direction is carried out according to a relationship (A, B, C, D) such that the speed of variation of the direction control is lower when the angular field is small,
**characterised in that**
the start of the execution of the control process is carried out automatically when an event has occurred in the angular field of the camera,
the automatic control of the direction of the optical axis towards the target direction and the adjustment of the angular field of the camera are executed according to a relationship (A, B, C, D) such that the speed of variation of the direction control is lower when the angular field is small, that relationship being adaptable to the user so that there are obtained progressive framing on the one hand and an enlargement of the image on the other hand, such that a sensation of continuity is automatically obtained by the observer.

2. Process according to claim 1, **characterised in that** a sampling grid of the camera is used, and a central portion of the grid is not taken into account and allows non-significant movements of the camera to be limited.

3. Automatic control process according to claim 1 or 2, **characterised in that** the relationship (A, B, C, D) is determined by selection by the user.

4. Automatic control process according to any one of claims 1 to 3, **characterised in that** the adjustment of the angular field of the camera is carried out by varying the focal length of a lens of the camera.

5. Automatic control process according to any one of the preceding claims, **characterised in that** the process is executed at least partly by a software module having a "multiprotocol" function.

6. Automatic control process according to any one of the preceding claims, **characterised in that** the event that triggers the control is the variation of at least one signal selected from the luminance signals and the chrominance signals of the electronic camera.

7. Automatic control process according to any one of the preceding claims, **characterised in that** the determination of the target direction is carried out by analysis of the camera image with reference to the variation of at least one luminance or chrominance component of at least part of the camera image.

8. Automatic control process according to claim 7, **characterised in that** the analysis comprises determining the largest variation among the variations determined in at least four regions disposed around the centre of the image, and orienting the target direction towards a region of larger variation.

9. Automatic control process according to claim 8, **characterised in that** the determination of the largest variation is carried out by determining the variation at several points aligned on a grid.

10. Automatic control process according to any one of claims 7 to 9, **characterised in that** the camera produces a coloured image and the analysis is carried out on a single colour channel of the camera signal.

11. Automatic control process according to claim 10, **characterised in that** the analysis is carried out on the green channel.

## Patentansprüche

1. Verfahren zur automatischen Kontrolle der Ausrichtung der optischen Achsen und des Blickfeldwinkels einer steuerbaren elektronischen Kamera mit verstellbarem Blickfeldwinkel, welche ein Bild liefert, das auf einem Bildschirm gezeigt werden kann, vom Typ mit:
dem Durchführungsbeginn des Kontrollverfahrens,
der Bestimmung einer Zielrichtung,
der Kontrolle der Ausrichtung der optischen Achsen der Kamera, damit sie sich der Zielrichtung nähert, und
der Einstellung des Blickfelelwinkels der Kamera,
wobei sich die Kontrolle der Ausrichtung der optischen Achsen zur Zielrichtung hin nach einer Relation (A, B, C, D) derart vollzieht, dass die Geschwindigkeit der Veränderung der Richtungskontrolle kleiner ist, wenn der Blickfeldwinkel klein ist,
**dadurch gekennzeichnet, dass**
der Durchführungsbeginn des Kontrollverfahrens automatisch erfolgt, wenn in dem Blickfeldwinkel der Kamera ein Ereignis eingetreten ist,
die automatische Kontrolle der Ausrichtung der optischen Achsen zur Zielrichtung hin und die Einstellung des Blickfeldwinkels der Kamera nach einer Relation (A, B, C, D) derart ausgeführt werden, dass die Geschwindigkeit der Veränderung der Richtungskontrolle kleiner ist, wenn der Blickfeldwinkel klein ist, wobei diese Relation für den Benutzer derart adaptionsfähig ist, dass man einerseits eine progressive Bildeinstellung und andererseits eine Vergrößerung des Bildes erhält, so dass durch den Benutzer automatisch eine kontinuierliche Wahrnehmung erhalten wird.

2. Verfahren nach Anspruch 1, **dadurch gekennzeichnet, dass** ein Gitter zur Probenahme der Kamera benutzt wird, wobei ein zentraler Teil dieses Gitters nicht berücksichtigt wird und erlaubt, die nicht signifikanten Verschiebungen der Kamera zu begrenzen.

3. Verfahren zur automatischen Kontrolle nach Anspruch 1 oder 2, **dadurch gekennzeichnet, dass** die Relation (A, B, C, D) durch Auswahl von dem Benutzer bestimmt wird.

4. Verfahren zur automatischen Kontrolle nach einem der Ansprüche 1 bis 3, **dadurch gekennzeichnet, dass** die Einstellung des Blickfeldwinkels der Kamera durch Veränderung der Brennweite eines Objektivs der Kamera realisiert wird.

5. Verfahren zur automatischen Kontrolle nach einem der vorhergehenden Ansprüche, **dadurch gekennzeichnet, dass** das Verfahren mindestens teilweise durch ein Softwaremodul durchgeführt wird, welches eine "Multiprotokoll"-Funktion hat.

6. Verfahren zur automatischen Kontrolle nach einem der vorhergehenden Ansprüche, **dadurch gekennzeichnet, dass** das die Kontrolle auslösende Ereignis die Verbänderung eines Signals ist, das mindestens unter den Luminanzsignalen und den Chrominanzsignalen der elektronischen Kamera ausgewählt ist.

7. Verfahren zur automatischen Kontrolle nach einem der vorhergehenden Ansprüche, **dadurch gekennzeichnet, dass** die Bestimmung der Zielrichtung durch Analyse des Bildes der Kamera unter Bezug auf die Veränderung einer Luminanz- oder Chrominanzkomponente mindestens eines Teils mindestens des Bildes der Kamera erfolgt.

8. Verfahren zur automatischen Kontrolle nach Anspruch 7, **dadurch gekennzeichnet, dass** die Analyse die Bestimmung der größten Veränderung unter den vorbestimmten Veränderungen in mindestens vier um das Zentrum des Bildes angeordneten Bereichen und die Orientierung der Zielrichtung zu einem Bereich der größten Veränderung hin aufweist.

9. Verfahren zur automatischen Kontrolle nach Anspruch 8, **dadurch gekennzeichnet, dass** die Bestimmung der größten Veränderung durch die Bestimmung der Veränderung an mehreren auf einem Gitter in Reihe angeordneten Punkten durchgeführt wird.

10. Verfahren zur automatischen Kontrolle nach einem der Ansprüche 7 bis 9, **dadurch gekennzeichnet, dass** die Kamera ein farbiges Bild liefert und die Analyse auf einem einzigen Farbkanal des Signals der Kamera erfolgt.

11. Verfahren zur automatischen Kontrolle nach Anspruch 10, **dadurch gekennzeichnet, dass** die Analyse auf dem Kanal der Farbe grün erfolgt.
